Europäisches Patentamt

**European Patent Office**

Office européen des brevets

(11) Publication number: **0 087 134**

**A1**

(12) **EUROPEAN PATENT APPLICATION**

(21) Application number: **83101560.7**

(22) Date of filing: **18.02.83**

(51) Int. Cl.³: **A 01 M 1/18**
**A 01 G 13/10**

(30) Priority: **19.02.82 US 350546**

(43) Date of publication of application:
**31.08.83 Bulletin 83/35**

(84) Designated Contracting States:
**AT FR IT**

(71) Applicant: **J.T. Baker Chemical Co.**
**222 Red School Lane**
**Phillipsburg, New Jersey 08865(US)**

(72) Inventor: **Browne, Lloyd E.**
**3555 Timberlane Drive**
**Easton Pennsylvania 18042(US)**

(72) Inventor: **Seidenberger, James W.**
**199 Providence Forge**
**Royersford Pennsylvania 19468(US)**

(74) Representative: **Vossius Vossius Tauchner Heunemann Rauh**
**Siebertstrasse 4 P.O. Box 86 07 67**
**D-8000 München 86(DE)**

(54) **Low-traction barrier method and apparatus for preventing traverse of gypsy moth caterpillars and similar destructive crawlers.**

(57) A strip of slippery, compliant material (22) has low-traction characteristics with respect to gypsy moth caterpillars and thus initially arriving caterpillars do not become stuck on the barrier (10) and do not form "bridges" across the barrier (10) over which later arrivals can crawl. Self-adhering adhesive material (16) extends longitudinally on one surface of the strip (12) along at least one of its longitudinal margins (14, 14A). The strip (12) is wrapped around and is adhered to the trunk (20) of a tree to provide a barrier (10) for preventing gypsy moth caterpillars from traversing either up or down the tree trunk (20) by causing them to slip off of the barrier (10) and fall to the ground whenever they attempt to traverse it.

Fig. 5.

EP 0 087 134 A1

## BACKGROUND OF THE INVENTION

The highly destructive nature of the gypsy moth caterpillar (Lymantria Dispar) toward a wide variety of tree and plant foliage commonly found throughout the United States is a well known and documented fact.  Currently, hugh efforts and a broad spectrum of materials and methods are being used in attempts to control this insect in our severely infested eastern states.  These efforts include broad-scale chemical and biological pesticide applications, the rearing and release of artificial populations of insect parasites, the use of pheromones in confusion and trapping devices, and the selective use of tree-banding materials and devices to limit caterpillar mobility in trees during certain stages in their life.

In mid-April through May overwintering gypsy moth egg masses hatch.  Each typically releases hundreds of small caterpillar larvae, each being approximately 1.56 mm in size.  Several hours after hatching, the small caterpillars search for and ascend trees or other tall objects located nearby.  After reaching the top of the object they climbed, the caterpillars attach themselves to a limb or other convenient overhanging point and descend through the air on silk threads.  Subsequent winds break the threads and carry the caterpillars en-mass through the air until they land on distant foliage, take up residence, begin feeding and continue their life cycle.

Feeding caterpillars exhibit certain unique behavior patterns, particularly during their later growth stages, that can be exploited advantageously by the use of certain tree barrier devices. During their second and third instar stages, many caterpillars feed only at night to avoid daytime detection by predators.  During pre-dawn hours, considerable numbers of caterpillars can be observed climbing down tree trunks to hide in the forest litter during the daylight hours. At dusk, the caterpillars become active and ascend the trees to continue feeding throughout the nighttime hours. Barrier tapes placed around tree trunks to stop climbing caterpillars can be used to help control their daily migratory behavior. Later stage caterpillars in their fourth and fifth instars feed continuously throughout a 24-hour period. If trees on which they are feeding are defoliated during this period, the caterpillars will descend and migrate en-mass along the ground in search of food. When a suitable host tree is found, access is gained to its foliage canopy by vertical ascent up the tree trunk.

Isolated host trees with intact foliage and no overlapping limb contact with nearby infested trees are particularly prone to infestation by ground migrating caterpillars. Many instances also exist in residential areas where trees have been sprayed and protected against early infestations. At a later date these trees become reinfested with ground migrating caterpillars after insecticide residual protection disappears. Barrier products placed around tree trunks are particularly helpful under these circumstances, because the barriers inhibit caterpillar access to tree canopies from ground level.

The situations described above; namely, individual isolated trees or small stand locations, previous spray treatments and localized migration patterns, are common occurrences in residential areas. Therefore, barrier products are advantageous to the individual homeowner in helping him cope with and limit the damage to trees on his property. Additionally, if designed properly, such barrier products can also be used on outbuildings and other structures to prevent mass agregation of caterpillars on their exterior surfaces -- another obnoxious problem encountered with this pest.

There are currently numerous banding devices and materials either being marketed or commonly used as "home remedy" cures for controlling caterpillar movement up trees. The products being sold are double-side coated adhesive tapes, banding devices containing insecticides, and adhesive pastes or sprays designed for application around tree trunks. Home remedy devices include wrapping tree trunks with plastic food wrap film, aluminum foil and burlap bags or strips. All of these approaches have inherent disadvantages.

Both double-side sticky tape and adhesive paste or adhesive spray formulations become ineffective in time due to the collection of dust, dirt, debris, or entrapped caterpillars. These conditions allow easy "bridging" by subsequent migrating caterpillars. Tacky pastes or spray formulations can be injurious to the living layers of the tree trunk and often cause near permanent disfigurement of trees. Banding devices containing insecticides require physical handling of the pesticides contained therein, thus exposing the user. Moreover, these banding devices are designed to introduce pesticides into the environment where exposure to non-target, beneficial insects and mammals such as spiders, released gypsy moth parasites, bees, birds, and squirrels is unavoidable.

The use of home remedies such as banding tree trunks with wide plastic film and aluminum foil sheets also has drawbacks. Voids formed between the film or foil surfaces in bark fissures and crevices provide damp unventilated pockets that provide ideal locations for fungal growth and attack sites on the tree. These voids can also provide protected sites for subsequent invasion by tree boring insects or other harmful parasites. Burlap bands do not really stop caterpillar migration, but only serve to provide shelter to those caterpillars desiring it. Such bands can be easily negotiated by caterpillars climbing upwards toward the tree canopy.

0087134

## SUMMARY OF THE INVENTION

A method and apparatus are provided for preventing gypsy moth caterpillars and other destructive crawling insects from ascending tree trunks and the like for reaching the foliage. A low-traction barrier formed from a slippery, compliant material is wrapped around and adhered to a tree trunk by adhesive material extending longitudinally along at least one longitudinal margin on one surface of the strip. Caterpillars ascending the tree trunk cannot traverse the slippery low-traction barrier and fall from the tree before reaching the foliage. Likewise, caterpillars descending the trunk slip off of the trunk while negotiating the barrier and are unable thereafter to ascend back up because of the presence of the traction barrier.

In one aspect of the invention, the adhesive material on the strip extends longitudinally along the top margin of the strip. As the strip is being wrapped around the trunk with its top margin being adhered to the bark, the top margin is folded by crimping between the thumbs into approximately equidistantly spaced pleats for forming a skirt barrier. This pleating effect along the top margin of the strip provides excees material relative to the circumference of the trunk, thereby causing the main body of the strip to form an outwardly flared low-traction skirt extending downwardly and outwardly from the upper affixed margin of the strip. This skirt configuration advantageously doubles the slippery low-traction surface area over which either an ascending or descending caterpillar must traverse in order to attempt passing the barrier band. Furthermore, the skirt requires a caterpillar to negotiate a 180° inversion against gravitational forces acting on the caterpillar when attempting to crawl down around the lower edge of the skirt. The action of the low-traction, compliant skirt is to greatly enhance the probability that a caterpillar will be unable to traverse the barrier, and will fall to the ground without reaching the foliage of the tree.

The various embodiments of the method and apparatus of the present invention are easy to use and handle. Each of the embodiments to be described avoids the use of the now commonly used double-sided sticky barrier band and the many concomitant disadvantages of exposed sticky surfaces as discussed herein. Moreover, the various embodiments of the present method and apparatus avoid the handling and use of pesticides, thus saving the user from exposure to pesticides and thus saving the environment and the helpful insects, bees,etc., and birds and squirrels from exposure thereto.

## Brief Description Of The Drawings

Fig. 1 of the drawings is an elevational view of a first embodiment of a low-traction barrier strip for preventing traverse of gypsy moth caterpillars and other similar destructive crawlers in accordance with one aspect of the present invention.

Fig. 2 is a cross-sectional view of the barrier shown in Fig. 1 as seen looking along the line 2-2 in Fig. 1.

Fig. 3 is an elevational view of a second embodiment of a low-traction barrier strip in accordance with another aspect of the present invention.

Fig. 4 is a cross-sectional view of the barrier shown in Fig. 3 as seen looking along the line 4-4 in Fig. 3.

Fig. 5 is a perspective view of the barrier shown in Figs. 1 and 2 affixed to a tree trunk to define a downwardly

**0087134**

outwardly extending skirt.  The upper margin of the compliant, low-traction strip is adhered to the bark and is tucked into crevices and fissures in the bark to prevent tunnels and is crimped at intervals between the thumbs as it is being applied to form the downwardly outwardly flaring low-traction barrier skirt.

Fig. 6 shows the upper margin of the strip being folded or crimped between the thumbs for forming a pleat for providing the outwardly flared skirt.

0087134

## Discussion of the Preferred Embodiments

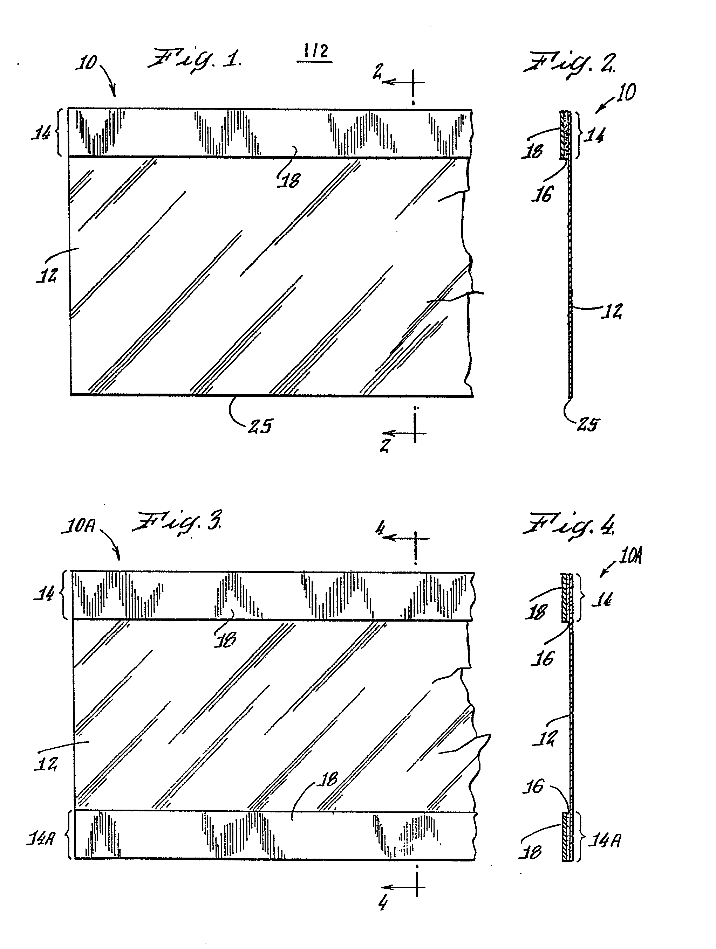

Figures 1-6 of the drawings illustrate the preferred embodiments of the low-traction barrier method and apparatus for preventing traverse of gypsy moth caterpillars or similar destructive crawlers, in accordance with the present invention.

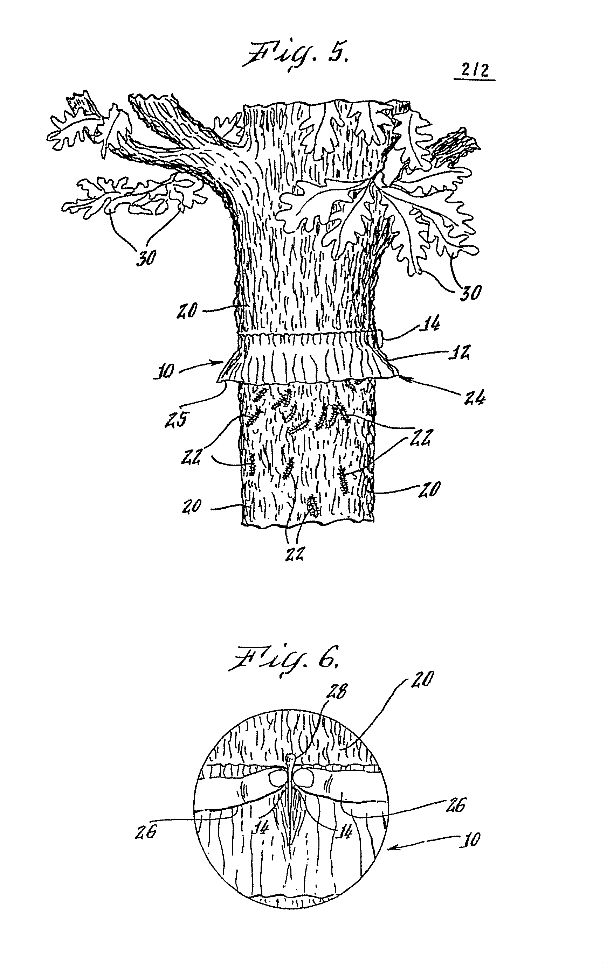

Referring first to Figures 1 and 2, a low-traction steep barrier is generally designated by the reference number 10. The barrier includes a strip 12 of thin-gauge, compliant material measuring 7.62 to 15.24 mm in width whose surface properties exhibit a low-traction or slippery effect such that gypsy moth caterpillars actually cannot gain sufficient foothold for transport across the surface of the strip 12 when this thin-gauge material is oriented in a vertical or near vertical position. Preferably this compliant thin-gauge material has a thickness in the range from 0.013 mm (0.5 mils) to 0.076 mm (3 mils) or more. If this strip of material 12 is too thin, it is unduly filmy, fragile and difficult to handle. On the other hand, if this material 12 is too thick it is not compliant enough for its top margin to be readily forced into crevices and fissures in the bark, and too thick material tends to spring out of such indentations. The thickness of the compliant strip 12 is not a critical factor so long as the required high compliance or flexibility is maintained for achieving snug, close and essentially gap-free adherent attachment of this material to a tree trunk or other surface as described below. It is also noted that if this material is unnecessarily thick, a waste of material is involved. In this presently preferred embodiment the strip 12 is 0.025 mm thick.

Applied to this strip 12 of slippery material along the top margin 14 is a band of self-adhering adhesive 16 covered by an attendant release tape 18 approximately 1 to 2 inches in width. This release tape 18 has the same width as the underlying adhesive 16. In practice as shown in Figs. 5 and 6 the release tape 18 is removed from the adhesive 16 for exposing this adhesive, and then the barrier strip 12 is affixed along its top margin 14 to and around the circumference of a tree trunk 20, being adhered to the bark by the adhesive 16. While positioning the barrier strip 12 around the trunk 20, the adhesive-coated top margin 14 of the strip is pushed firmly into bark fissures to hold this top margin in close conformity to the bark or surface contours for preventing voids or tunnels beneath the barrier through which some caterpillars 22 might crawl.

Contact with and close conformity to the bark surface is desirable to maximize adhesive contact area along the margin 14 for secure attachment and also to prevent gaps through which caterpillars may crawl.

When the top margin 14 of the barrier 10 is forced into close conformity with the rough bark of a tree, the longitudinal length of this margin 14 as it follows the bark convolutions will exceed the circumference of the trunk 10 as measured by stretching a string tightly around the trunk. Consequently, the resultant excess material will cause the main body of the strip 12 below the margin 14 to flare outwardly in a "skirt" configuration or "skirt" effect 24. If the barrier 10 is being applied to smooth-barked trees or surface, the upper margin is folded over on itself or "pleated" periodically, for example every 10.16 to 15.24 cm as needed for   causing the barrier 10 to form this "skirt" effect 24. (As indicated above, the application of this barrier 10 to deeply fissured bark yields the same skirt effect 24). This pleating is accomplished as shown in Fig. 6 by crimping the upper margin 14 between the thumbs 26 with the self-sticking adhesive 18 being located on the interior of the resultant pleat 28.  For example, these pleats 28 may be spaced apart from 10.16 to 15.24 cm and  they may be folded so as to project out from the tree trunk by a distance of 12.7 to 25.4 mm,     as needed in the particular installations so that a well-defined skirt configuration 24 is produced.  In such a well-defined skirt configuration the lower edge 25 (Figs. 1 and 2) of the compliant, low-traction strip 12 will be spaced at least 25.4 mm on  average from the bark.  This minimum spacing of the lower edge 25 at least 25.4 mm away from the trunk 20 is not critical, but this is our preferred minimum skirt flareout for providing the most difficult arrangement for foiling traverse maneuvers of the low-traction barrier by gypsy moth caterpillars.

This particular skirt configuration causes the lower unattached portion of the strip 12 to flare out free away from the surface of the tree bark out of immediate reach of upward crawling caterpillars.  This outwardly flaring skirt configuration 24 also advantageously effectively doubles the linear low-traction slippery barrier surface per width of strip 12 across which caterpillars might traverse to ascend past the barrier.  Additionally, those caterpillars descending the tree which venture out onto the slippery barrier skirt surface will find it difficult to reverse direction at the lower edge 25 of the skirt and will eventually fall off of this skirt.

OC87134

We have carried out a considerable number of experiments and we have discovered that certain thin-gauge compliant material or substrate materials which have been specially coated advantageously exhibit low-traction slippery effects with respect to the crawling locomotion of gypsy moth caterpillars such that they actually cannot gain sufficient foothold for transporting themselves in attempting to traverse the surface of this material when it is oriented in a vertical or near vertical position.

We discovered that a commercially available polymer sheet material and other specially release-agent-coated substrates were useful and very effective in providing the desired low-traction properties for defeating the crawling of gypsy moth caterpillars when oriented vertically or near vertically. This commercially available polymer sheet material which is very effective and which we presently consider to have the optimum low-traction characteristics in preventing traverse of gypsy moth caterpillars is vinylidene chloride-vinyl chloride copolymer, sold by Dow Corning Corporation under the trademark SARAN® film. We cannot now explain why SARAN® film exhibits such advantageous low-traction surface properties when such caterpillars attempt to traverse it. Conversely, we have discovered that commercially available polyester films, commercially available polypropylene films, commercially available polyethylene films and commercially available highly polished (calendered) paper do not exhibit such low traction properties, because gypsy moth caterpillars can easily traverse up or down across them when oriented vertically. However, we have found that such polyester, such polypropylene, such polyethylene, and such highly polished (calendered) paper can be cause to 0087134
exhibit the desired low-traction for gypsy moth caterpillars
when they are used as a substrate and are coated with a thin
coating of commercially available silicone release agents,
such as are used for coating substrates for tape adhesive
releases, for example such silicone release agents as SILOX$^R$
E39/E 698 and SILOX$^R$ TL 298 sold by Akrasol Corporation.

The thickness of such substrates plus the thin coating
of release agents thereon may range from 0.013 to 0.076 mm
but it is not a critical factor as long as the required high
compliance or flexibility is maintained for achieving snug,
close and essentially gap-free adherent attachment of the
barrier to the tree or other surface.

Inviting attention back to Fig. 2, it is noted that
the outer surface of the strip 12 in the region of the margin 14
has no adhesive 16 so that the total area of the outer surface
of the strip 12 is defined by compliant, low-traction, slippery
material.

In the preferred example as shown in Figs. 1, 2, 5 and
6 the strip 12 including its margin 14 has an overall vertical
height, i.e. the total width of this strip, in the range of
7.62 to 10.16 cm and the adhesive 16 and release tape 18 have a
width of 2.54 to 3.17 cm,  for example, the strip 12 is SARAN®
vinylidene chloride-vinyl chloride copolymer film 8.9 cm wide
and 0.025 mm thick,  and the adhesive 16 on the margin 14 is
2.86 cm wide.  '  Thus, the area of the strip 12 below the
adhesive-coated margin 14 is  6.03 cm wide.   Assuming that
this barrier 10 is applied in a skirt configuration as shown in
Fig. 5 with the lower edge 25 of the skirt 24 spaced one inch
away from the tree trunk, then the skirt 24 is flared out at
an acute angle of approximately 25° from vertical.

0087134

It is now understood that the barrier 10 provides a highly effective barrier for preventing gypsy moth caterpillars 22 from traversing a tree trunk 20. Referring again to Fig. 5, an ascending caterpillar 22 confronted with skirt 24 must first climb up the trunk until it reaches the lower limit of the attached margin 14. Then, the caterpillar must attempt to climb downwardly and outwardly on the inner slippery, low-traction surface of the skirt 24 until it reaches the lower edge 25 of the skirt. Gravity is acting on the caterpillar to pull it downwardly, at the rim 25 of the skirt 24, the caterpillar must attempt to negotiate a 180° inversion in order to climb to the outer surface of the skirt. Then it must attempt to climb upwardly on the slippery, low-traction outer skirt surface against gravitational forces acting on it until it reaches the margin 14. The caterpillar then must attempt to climb vertically upwardly on the slippery, low-traction outer surface of margin 14 in order to successfully traverse the whole barrier 10.

In our experimental observations it is virtually impossible for a gypsy moth caterpillar to traverse up a tree trunk past such a skirt barrier 10 and to make the above-described maneuvers without falling to the ground.

Thus, the skirt 24 advantageously effectively doubles the slippery surface area which the caterpillar 22 must attempt to traverse, and requires the caterpillar to make difficult maneuvers against gravitational forces. Moreover, the skirt 24 acts as an "umbrella" to protect its inner surface against weathering. Consequently, the inner sloping surface of the strip 12 in the skirt 24 retains its low-traction slippery characteristics as a barrier against traverse by gypsy moth caterpillars for a whole season, even though the outer surface may degrade somewhat over a period of weather exposure of a month or more with respect to its initial low-traction properties.

When a caterpillar on the trunk above the barrier 10 attempts to traverse it downwardly, the caterpillar must perform the same maneuvers described above, except in reverse order. Again, in our experimental observations it is virtually impossible that a descending caterpillar can negotiate the skirt 24 without falling. Once the caterpillar falls, the skirt prohibits its ascent up the tree trunk to the foliage 30.

By positioning the barrier 10 on the trunk 20 of a tree below the foliage 30, caterpillars 22 are prevented from reaching that foliage and destroying it.

The embodiment of the invention illustrated in Figs. 3 and 4 is similar to that of Figs. 1, 2, 5 and 6. Corresponding reference numerals are used to designate corresponding elements of this low-traction barrier 10A. The low-traction strip 12 of Figs. 3 and 4 includes both its first and second margins 14 and 14A coated with self-sticking adhesive material 16 extending longitudinally along the margin. A release tape 18 is removably applied over the adhesive material 16 along both margins.

In use, the low-traction barrier 10A of Figs. 3 and 4 is wrapped around the circumference of a tree trunk and affixed thereto by pressing both the adhesive-coated lower longitudinal margin 14A and the adhesive-coated upper longitudinal margin 14 of the compliant, low-traction strip 12 firmly and snuggly in gap-free conformity against the bark of the tree trunk. The strip 12 thus forms a low-traction barrier oriented substantially vertically. In order to traverse this low-traction barrier a caterpillar must climb vertically upwardly across the entire width of the outer surface of the

**0087134**

strip 12. By virtue of the fact that the outer surface of the barrier 10A is formed entirely from slippery, low-traction material, it is virtually impossible in our experience for a gypsy moth caterpillar to traverse it without falling. It is also possible to affix the strip 12 to the tree tunk with slack in the vertical direction and pleated margins 14 and 14A in the horizontal direction. In this manner, the outer surface of the strip 12 will be undulated, thereby rendering it even more difficult to traverse for a caterpillar.

We presently consider the embodiment 10 of Figs. 1, 2, 5 and 6 to be the very best low-traction barrier, because it requires less adhesive 16 and less release tape 18 than the embodiment 10A and yet it provides almost double the effective low-traction surface which must be traversed. Moreover, the low-traction barrier 10 in its skirt configuration acts as an umbrella for maintaining its inner surface in unweathered condition for a whole season and in a most difficult configuration to traverse. The embodiment 10A is also extremely effective, and they both are far and away superior, in our view, to any other caterpillar barrier presently known.

In summary, the embodiments of the present invention discussed above provide effective methods and apparatus for preventing gypsy moth caterpillars and other similar crawling insects from traversing a tree trunk or other vertically oriented objects. The invention advantageously:

1) Provides a barrier method that does not require the handling or introduction of chemical pesticides into the environment.

2) Provides a non-sticky-outer-surface barrier that consequently does not loose effectiveness because of entrapment of insects or dirt and debris in the sticky outer surface.

3) Provides method and apparatus for caterpillar migration control that does not interfere with non-target beneficial insects or other forest wildlife.

4) Provides a barrier that does not injure, mar, or promote injury to trees during its use.

5) Provides a barrier using a polymeric film's unique low-traction slippery surface properties vis-a-vis gypsy moth caterpillars and using the unique slip properties of release agent coating materials on substrates vis-a-vis such caterpillars not previously investigated for nor applied to the construction of a barrier for caterpillar control.

6) Provides a barrier employing a novel low-traction "skirt" design that nearly doubles the low-traction slippery barrier distance presented for traversing to the crawling insect as compared with the traversing distance of other typical barrier type bands of the same width.

7) Provides a barrier employing a skirt design presenting a particularly difficult low-traction barrier configuration to ascending caterpillars.

8) Provides umbrella-like protection for the undersurface of the skirt. Thus, weathering exposure to the effects of rain, dust and dirt and their deleterious effects on the functioning low-traction slippery undersurface are considerably more limited during a season in comparison to other banding devices.

0087134

9) Upward migrating caterpillars encounter the low-traction barrier and are prevented from further ascent up the tree, and those which do attempt a traverse end up falling off. Downward migrating caterpillars which venture onto the low-traction surface slip off of it and are thereafter prevented from reascending.

The discussions of the embodiments of the invention herein have been intended to be illustrative and not restrictive of the scope of the invention, that scope being defined by the following claims and all equivalents thereto.

- 18 -

0087134

CLAIMS:

1. A method of preventing traverse by vertically crawling destructive insects on an object to be protected from said insects, comprising the steps of:

providing a strip having low-traction, slippery surface properties vis-a-vis the vertically crawling insects,

affixing said strip to said object to be protected with said strip extending across the expected vertical path of the crawling insects, and

exposing said surface having such low-traction slippery properties for requiring the insects to traverse across said surface in a vertical or near vertical orientation for causing those insects which venture onto such surface to slip off and fall to the ground.

2. The method of preventing traverse by vertically crawling insects on an object desired to be protected from such insects as claimed in Claim 1 including the further steps of:

providing a highly compliant strip and applying self-sticking adhesive along at least one margin of this strip, and

forcing the compliant margin to adhere in close conformity to the surface convolutions of the object to be protected for secure attachment of the strip to the object and for avoiding gaps between the strip and the protected object through which some of the insects might crawl.

3. The method of Claim 2 further including the step of:

applying said adhesive along the upper longitudinal margin of said strip, and

BAD ORIGINAL

securely adherently attaching said upper margin to said object with the remainder of said strip flaring outwardly and downwardly in a skirt configuration.

4. The method of Claim 2 further including the step of:

applying adhesive along both the upper and lower longitudinal margins of said strip, and

securely adherently attaching both the upper and lower margins of said strip to said object to be protected with said surface having low-traction slippery properties facing outwardly.

5. The method of Claim 2 or 3 further including the steps of:

providing said strip having low-traction slippery surface properties vis-a-vis vertically crawling insects on both surfaces,

pleating the upper margin of said strip at longitudinally spaced locations for forming a downwardly extending, outwardly flared skirt configuration of said strip below said margin for increasing the distance which said insect must traverse across both surfaces of said strip to a distance greater than the width of said strip.

6. The method of Claim 1, 2 or 3 wherein said low-traction, slippery material is formed from vinylidene chloride-vinyl chloride copolymer.

7. The method of Claim 6 wherein said low-traction, slippery material has a thickness in the range of 0.013 to 0.076 mm.

8.    A method for preventing gypsy moth caterpillars and similar foliage destroying crawlers from travelling up or down along a tree trunk comprising the steps of:

encircling the tree trunk with material having low-traction slippery surface properties vis-a-vis such destructive crawlers, and

exposing the low-traction surface of such material for traverse by crawlers which are attempting to crawl up or down the tree trunk for causing those crawlers to traverse said low-traction surface from which they slip off and fall to the ground.

9.    The method as claimed in Claim 8 comprising the further steps of:

providing a strip of material having said low-traction slippery surface properties on both surfaces, and

encircling the tree trunk with said strip of material configured as a downwardly outwardly flared skirt for exposing both the inner and outer low-traction surfaces of said skirt for traverse by those crawlers which are attempting to crawl up or down the trunk for increasing the effective traverse distance and for forcing the crawlers to attempt to negotiate an inverted turn at the lower rim of said skirt with gravity force working against the crawlers for causing them to slip off and fall to the ground.

10.    The method as claimed in Claim 9, comprising the further steps of:

providing such strip having compliant flexibility, applying self-sticking adhesive along the upper margin of said strip on one surface, and

adherently attaching said upper margin of said compliant strip in close conformity with bark contours for preventing tunnel-like gaps beneath said margin.

11. The method as claimed in Claim 10, comprising the further step of:

pleating the upper margin of said compliant strip at spaced intervals while adherently attaching the strip to the tree-bark for providing excess material for causing the remainder of the strip below said upper margin to flare outwardly in skirt configuration spaced away from the tree trunk.

12. A method for protecting tree foliage from gypsy moth caterpillars and similar destructive crawlers comprising:

creating a surface having low-traction slippery properties with respect to such crawlers encircling the tree trunk across which surface the crawlers must traverse in attempting to proceed up or down the tree trunk for causing them to slip from such surface and fall off to the ground.

13. The method as claimed in Claim 12 comprising the step of:

creating said surface by adhesively attaching in encircling relationship around the trunk a strip of vinylidene chloride-vinyl chloride copolymer film having a thickness in the range from 0.013 to 0.076 mm.

14. The method as claimed in Claim 12 or 13 comprising the step of:

creating two surfaces having low-traction slippery properties with respect to such crawlers oriented in skirt configuration encircling the tree trunk, one such surface being the inner surface of the skirt, and the other being the outer surface of the skirt.

15.   The method as claimed in Claim 12 comprising the steps of:

creating said surface by coating a strip of flexibly compliant material with a silicone release agent, and

adhesively attaching said strip in encircling relationship around the trunk.

16.   A low-traction barrier for attachment to an object for preventing traverse of destructive vertically crawling insects, said barrier including:

a strip having low-traction, slippery surface properties with respect to said vertically crawling insects, and

means for attaching said strip to said object to be protected with said low-traction surface positioned for traverse so that insects traversing said surface slip off and fall to the ground.

17.   The barrier of Claim 16 wherein said means for attachment is adhesive applied to one surface of said strip along one longitudinal margin.

18.   The barrier of Claim 16 wherein said means of attachment is adhesive applied along the upper longitudinal margin of said strip.

19.   The barrier of Claim 18 in which:

said strip is flexibly compliant and said upper margin containing said adhesive is adapted to be pleated while being attached to the object for forming said strip into a downwardly extending, outwardly flared skirt below said margin for increasing

0087134

Claim 19 Cont'd.

the low-traction distance said insect must traverse to pass said barrier to a distance greater than the width of said strip.

20. The barrier of Claim 17 further including adhesive applied to said one surface of said strip along both longitudinal margins.

21. The barrier of Claim 16, 18, or 19 wherein said strip is formed from vinylidene chloride-vinyl chloride copolymer.

22. The barrier of Claim 21 wherein said strip has a thickness in the range of 0.013 to 0.076 mm.

Fig. 1.   1/2

Fig. 2.

Fig. 3.

Fig. 4.

Fig. 5.

30

30

20

14

10

12

25

24

22

22

20

22

20

Fig. 6.

28

20

26

26

14

14

10

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE-C- 60 260 (A.F. TÜRCKE)<br><br>* Whole document *<br><br>--- | 1,8,9, 12,14, 16 | A 01 M 1/18<br>A 01 G 13/10 |
| X | DE-C- 606 716 (J. KLIPPEL)<br><br>* Page 2, lines 36-38; figure 1 *<br><br>--- | 1,8,9, 12,14, 16 | |
| A | US-A-1 335 845 (L.A. LONG)<br><br>--- | | |
| A | US-A-1 674 118 (S.W. MERRICK)<br><br>----- | | |

**TECHNICAL FIELDS SEARCHED (Int. Cl. ³)**

A 01 M
A 01 G

The present search report has been drawn up for all claims

| Place of search | Date of completion of the search | Examiner |
|---|---|---|
| THE HAGUE | 19-05-1983 | NEHRDICH H.J |